# EUROPÄISCHE PATENTSCHRIFT

(11) **EP 0 262 486 B1**
(45) Veröffentlichungstag und Bekanntmachung des Hinweises auf die Patenterteilung: **18.11.1993**
(21) Anmeldenummer: 87113271.8
(22) Anmeldetag: 10.09.1987
(51) Int. Cl.: H04Q 3/545, G06F 12/14

(54) **Adressenverwaltungseinheit einer Multiprozessor-Zentralsteuereinheit eines Nachrichten-Vermittlungssystems**
Address management unit of a central multiprocessor control unit of a telecommunication exchange system
Unité de gérance d'adresses d'une unité de commande centrale à multiprocesseur d'un système de central de télécommunication

(30) Priorität: 25.09.1986 DE 3632608
(43) Veröffentlichungstag der Anmeldung: 06.04.1988
(73) Patentinhaber: SIEMENS AKTIENGESELLSCHAFT, 80333 München (DE)
(72) Erfinder: Dietrich, Klaus, Ing. (grad.), D-8029 Sauerlach (DE); Hauer, Hans, Dipl.-Ing. (FH), D-8000 München 83 (DE); Schreier, Klaus, Dipl.-Ing., D-8122 Penzberg (DE)

(56) Entgegenhaltungen:
- FR-A- 2 533 736
- US-A- 4 163 280
- ELECTRONIC DESIGN, Band 28, Nr. 9, April 1980, Seiten 128-135, Rochelle Park, US; J. HU et al.: "Memory-management units help 16-bit muPs to handle large memory systems"

## Beschreibung

Die Erfindung betrifft eine Adressenverwaltungseinheit zur Umwandlung logischer, in einem Programm enthaltener Adressen in physikalische Adressen für eine Multiprozessor-Zentralsteuereinheit eines rechnergesteuerten Nachrichtenvermittlungssystems mit einem zentralen Großspeicher gemäß dem Oberbegriff des Patentanspruchs 1.

Aus der französischen Patentanmeldung FR-A-2 533 736 ist im Zusammenhang mit einer Datenverarbeitungsanlage, die neben einer zentralen Steuereinheit Spezialprozessoren sowie andere Komponenten, wie Ein - /Ausgabeeinheiten umfaßt, eine Adressenverwaltungseinheit bekannt, die der Verwaltung des Hauptspeichers dieser Datenverarbeitungsanlage dient.

Weitere Speicherverwaltungseinheiten sind bekannt aus
* Internat. Zurich Seminar on Digital Comm., März 1986, S. 213 bis 218, besonders S. 216, re. Sp. und Fig. 3
ferner aus
* Intel, Advance Inform, 80386 High Perform. Microproc. with integr. Memory Managm., Oct. 1985, Bestellnummer 231630-001,
ferner aus
* Motorola, Beschreibung des Bausteins MC 68451, z.B. im Produktkatalog S. 4-818 bis 4-835, und aus
* Electr. Engg. März 1985, S. 47 bis 49.

Eine Multiprozessor-Zentralsteuereinheit eines Nachrichtenvermittlungssystems, mit der im Zusammenhang die erfindungsgemäße Adressenverwaltungseinheit zum Einsatz kommt, kann beispielsweise gemäß den europäischen Patentanmeldungen
EP-A- 135 931
EP-A- 140 155
EP-A- 141 984
EP-A- 141 247
EP-A- 141 146
EP-A- 141 245
EP-A- 127 118
EP-A- 131 217
aufgebaut und betrieben werden. Die Erfindung ist aber nicht auf diesen speziellen Aufbau und diese spezielle Betriebsweise der zentralen Steuereinheit beschränkt.

Die Aufgabe der Erfindung besteht in der Ausgestaltung einer Adressenverwaltungseinheit derart, daß gegenüber den Verhältnissen in der F-A-2 533 736 nicht nur eine Speicherverwaltung sondern ganz allgemein eine Adressenverwaltung unter Einbeziehung weiterer zum Großspeicher der Zentralsteuereinheit hinzukommender Einheiten, wie lokaler Speicher der verschiedenen Prozessoren und peripherer Einheiten möglich ist.

Diese Aufgabe wird mit Hilfe der im Kennzeichen des Patentanspruchs 1 angegebenen Maßnahmen gelöst.

Die in den Unteransprüchen genannten zusätzlichen Maßnahmen gestatten, zusätzliche Vorteile zu erreichen. So gestatten die Maßnahmen gemäß Patentanspruch 2 einen besonders einfachen Aufbau und eine besonders einfache Betriebsweise des Sonderspeichers sowie des Adressenadressierers und des Vergleichers zu erreichen, die Maßnahmen des Patentanspruchs 3, besonders rasche Umwandlungen zu erreichen, sowie die Maßnahmen des Patentanspruchs 4 einen besonders raschen Betrieb der bei einer solchen Zentralsteuereinheit außerordentlich stark belasteten IO-Einheiten zu erreichen.

Die Erfindung wird anhand der in den beiden Figuren gezeigten Beispiele näher erläutert, wobei
Figur 1 schematisch ein bekanntes Beispiel der wichtigsten Organe eines solchen Vermittlungssystems und
Figur 2 schematisch ein Beispiel für den Aufbau der Adressenverwaltungseinheit gemäß der Erfindung zeigt.

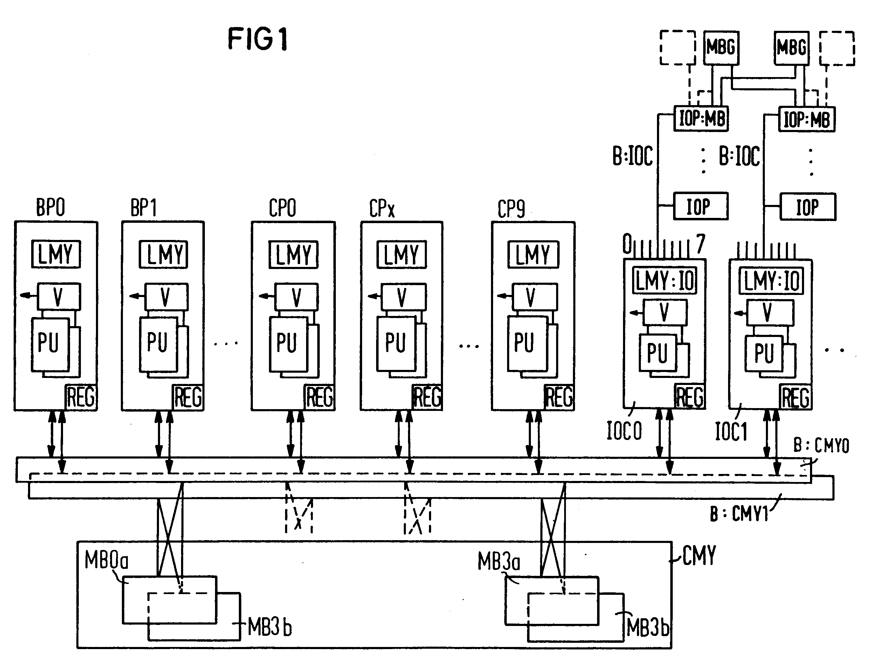

Das zur beispielsweisen Erläuterung dargestellte Ausführungsbeispiel soll die Zentralsteuereinheit eines Fernsprech-Vermittlungssystems betreffen. Die Figur 1 zeigt schematisch ein Beispiel einer solchen Zentralsteuereinheit. Gezeigt sind mehrere, z.B. - zwölf verschiedene zentrale Prozessoren BP, CP mit in sich gedoppelten 32-Bit-Prozessoreinheiten PU und je einem lokalen Speicher LMY. Sie dienen zur Bearbeitung von Vermittlungsaufgaben. Die zentralen 32-Bit-Prozessoren BP unterscheiden sich von den übrigen zentralen 32 Bit-Prozessoren CP im allgemeinen dadurch, daß die Prozessoren BP bestimmte zusätzliche Aufgaben übernehmen, z.B. bei Störungen im Vermittlungssystem.

Gezeigt ist ferner ein zentraler Speicher CMY, der hier sicherheitshalber aus vier in sich gedoppelten Speicherblöcken MB besteht und zu dem die zentralen Prozessoren BP, CP über das - ebenfalls in sich gedoppelte, jeweils die 32 Bits parallel übertragende - Bussystem B:CMY Zugriff haben. Durch die Doppelungen wird eine hohe Betriebssicherheit und damit eine sehr große Verfügbarkeit erreicht.

In den oben genannten europäischen und deutschen Patentanmeldungen sind viele beispielhafte Details über Aufgaben und Betriebsweisen der verschiedenen gezeigten Bestandteile bzw. Organe dieses Beispiels angegeben, z.B. auch über die peripheren Einheiten IOP, MBG und den zentralen Großspeicher CMY, über die zusätzlichen lokalen Speicher LMY und sonstige Besonderheiten der verschiedenen zentralen Prozessoren BP, welche über das zentrale Bussystem B:CMY mit dem Großspeicher CMY zusammenarbeiten. Daher kann hier auf entsprechende Wiederholungen verzichtet werden.

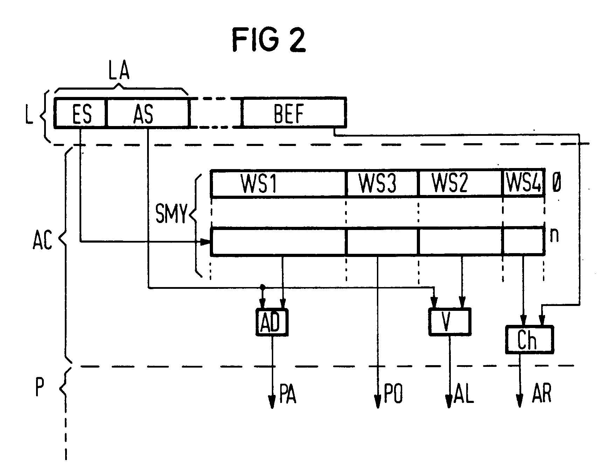

Die Figur 2 zeigt ein Beispiel für die erfindungsgemäße Adressenverwaltungseinheit AC zur Umwandlung der logischen, in einem Prog rammschritt L enthaltenen Adresse LA in die physikalische Adresse PA, PO für das in Fig. 1 gezeigte Beispiel der Multiprozessor-Zentralsteuereinheit eines Nachrichten-Vermittlungssystems. Diese Adressenverwaltungs einheit AC dient also z.B. zur Umwandlung logischer Adressen LA in die physikalischen Adressen PA, PO von Speicherplätzen in einem der Speicher LMY, CMY, und/oder zur Umwandlung in die physikalischen Adressen PA, PO von peripheren Einheiten IOP/MBG und/oder zur Umwandlung in die physikalischen Adressen PA/PO von IO-Einheiten IOC zwischen der Zentralsteuereinheit und den peripheren Einheiten IOP/MBG.

Die logische Adresse LA stellt hier ein z.B. aus 32 Bits bestehendes Adreßwort mit mindestens zwei Adreßsilben ES, AS dar, von denen die eine, erste, z.B. aus 11 Bits bestehende Adreßsilbe ES der Adresse ES im Sonderspeicher SMY entspricht, unter der physikalische Startadresse WS1 des angesteuerten logischen Adreßraumes eingespeichert ist,
- sie "entspricht" bedeutet also, sie "ist identisch" oder sie "korreliert", z.B. durch Invertieren aller 0 zu 1 und aller 1 zu 0.

Gleichzeitig ist unter dieser Adresse ES im Sonderspeicher SMY die wahre Adresse WS3/PO desjenigen physikalischen Adreßraumes eingespeichert,der für eine logische Adreßsilbe ES konkret anzusteuern ist. Durch Addition der anderen logischen Adreßsilbe AS und der physikalischen Startadresse WS1 mittels des Adressenaddierers AD erhält man jeweils die physikalische Adresse PA innerhalb dieses physikalischen Adreßraumes WS3/PO.

Die Adressenverwaltungseinheit AC enthält einen Sonderspeicher SMY zur Speicherung von z.B. 2048 verschiedenen Wörtern WS mit großer Wortlänge unter 2028 Adressen ES, sowie einen Adressenaddierer AD, einen Vergleicher V und eine Checkeinheit Ch.

Die Adressen ES der Speicherplätze des Sonderspeichers SMY entsprechen also den einen, ersten Adreßsilben ES der logi schen Adressen LA, so daß mittels dieser Adreßsilben ES die im Sonderspeicher SMY gespeicherten physikalischen Adressen WS1/WS3 gelesen werden können. Die im Sonderspeicher SMY gespeicherten Wörter WS enthalten aber jeweils mindestens vier Wortsilben WS1 bis WS4:

Die erste, z.B. 32 Bits enthaltende Wortsilbe WS1 entspricht jeweils der physikalischen Startadresse WS1 bzw. PO des anzusteuernden physikalischen Adreßraumes PO, z.B. innerhalb des lokalen Speichers LMY von einem der zentralen Prozessoren CPx.

Die zweite - z.B. 21 Bits wie die andere, zweite Adreßsilbe AS enthaltende - Wortsilbe WS2 entspricht jeweils der höchsten Adresse des mit der Adreßsilbe ES ansteuerbaren physikalischen Adreßraumes, also der Anzahl der physikalisch vorhandenen Adressen des anzusteuernden physikalischen Adreßraumes. Diese zweite Adreßsilbe WS2 entspricht also z.B. der Anzahl der ansteuerbaren Adressen des jeweils mit der Adreßsilbe ES anzusteuernden Speichers, vgl. LMY oder CMY, oder der Anzahl der jeweils ansteuerbaren Adressen der peripheren Einheiten IOP/MBG oder IO-Einheien IOC.

Die dritte Wortsilbe WS3 entspricht der Adresse PO bzw. der Steuerleitung PO des jeweils anzusteuernden physikalischen Organes, z.B. LMY von CPx.

Die vierte Wortsilbe WS4 entspricht jeweils Informationen über Zugriffsrechte, z.B. Informationen, die mit dem Befehl BEF des Programmschrittes L mittels der Checkeinheit Ch zu vergleichen sind. Diese Informationen betreffen also z.B. ein Nur-Lesen-Recht oder ein nur in Sonderbetriebsfällen, z.B. bei Urstart, Wiederanlauf oder speziellen Alarmfällen, erteilbares Recht.

Die Silben ES, AS und WS1 bis WS4 können neben den genannten Bits noch zusätzliche Bits, z.B. Paritätsbits oder einen EDC-Code, zur Überwachung auf Fehler enthalten.

Der z.B. 21 Bits breite Vergleicher V vergleicht jeweils die andere, zweite Adressensilbe AS oder jeweils das Additionsergebnis PA des Adressenanddierers AD einerseits mit der zweiten Wortsilbe WS2 andererseits, wobei getestet wird, ob physikalis ch nicht vorhandene Adressen angesteuert werden; - notfalls löst dann der Vergleicher V den Alarm AL aus.

Die vierte Wortsilbe WS4 überwacht den Zugriff auf das gemäß der dritten Wortsilbe WS3 anzusteuernde Organ PO mittels der Checkeinheit Ch, wobei hier die Checkeinheit Ch entweder einen Alarm AR auslöst, wenn kein Zugriffsrecht vorliegt, oder ein ENABLE-Signal abgibt, wenn ein Zugriffs-recht vorliegt.

Bei der Erfindung wird also - mit anderen Worten - die logische Adresse LA in eine erste Adreßsilbe ES, welche im allgemeinen aus den höherwertigen Stellen der Adresse LA besteht, und in eine andere, hier der zweite, Adreßsilbe AS zerlegt. Unterschiedliche eine, hier erste, Adreßsilben ES lassen sich z.B. unterschiedlichen Software Komponenten zuordnen. Mit der einen Adreßsilbe ES werden in dem eigens hierfür vorgesehenen Sonderspeicher Zeilen bzw. Bereiche adressiert, welche die notwendigen Daten für die Ansteuerung der anzusteuernden, logisch adressierten Organe enthalten, nämlich:
- Eine erste Wortsilbe WS1, welcher einer Startadresse bzw. Basisadresse entspricht, der zur Bildung der resultierenden physikalischen Adresse die andere Adreßsilbe AS aufaddiert wird,
- eine Angabe WS2, die den für die Basisadresse WS1 zulässigen Bereich festlegt,
- ein Kennzeichen WS3, das den zugewiesenen physikalischen Adreßraum angibt - also z.B. ein spezielle Organ des Vermittlungssystemes oder eine spezielle Region eines der Großspeicher, also z.b. einen der Speicherblöcke MB - sowie
- verschiedene Kennzeichen WS4, die den zulässigen Zyklentypen, z.B. "Schreiben erlaubt", Rechnerstati, z.B. "Alarm wegen Hardware-Defekt", und/oder Programmstati, z.B. "bei diesem Programmabschnitt zulässig", entsprechen.

Diese Kennzeichen WS4, die die vierte Wortsilbe WS4 bilden, können bei Bedarf sehr viele Bits enthalten. Sie können nämlich jeweils einen eigenen Katalog von Zugriffsrechten darstellen, wobei einzelnen im Katalog enthaltenen Rechte, z.B. mittels eigener Vergleicher, mit dem Status des Programmes, der Zentralsteuereinheit oder dem Teil BEF des Programmschrittes verglichen wird. Um mit dem letztgenannten Kennzeichen WS4 prüfen zu können, können die entsprechenden Angaben, z. B. BEF, zusammen mit der logischen Adresse LA geliefert geliefert (z.B. Lesen, Schreiben), oder vom Programm bzw. von dem betreffenden Organ der Zentralsteuereinheit abgeleitet (z.B. Rechnerstatus, Ausführungspriorität) oder erzeugt werden (z.B. Laden einer Software- oder Task-Identifikation).

Bei jeder Ansteuerung, d.h. logischen Adressierung LA werden diese vier Wortsilben bzw. Informationen WS1 bis WS4 bevorzugt parallel gelesen und parallel verarbeitet. Im Fehlerfall wird die gewünschte Aussteuerung nicht gestartet, sondern z.B. sämtliche Indizien, die in der Checkeinheit Ch bewertet wurden, eingefroren sowie eine Fehlerbehandlung bzw. Fehlersuche gestartet. Moderne Hochleistungsmikroprozessoren von z.B. jeweils 32 Bit Breite erlauben hierzu eine rasche Fehlerbehandlung mit evtl. Ersatzabläufen und/oder Wiederholungsversuchen der zunächst nicht zugelassenen Ansteuerung, also des abgewiesenen Zugriffs, um Rückwirkungen auf den Betrieb der Zentralsteuereinheit zu vermeiden oder zu minimieren.

Um den Dynamikverlust für die Ansteuerzyklenabwicklung klein zu halten, wird ein besonders schneller Sonderspeicher SMY vorgesehen, der für eine Vielzahl - z.B. bei 11 Bit-Breite der einen Adreßsilbe ES bis zu 2048 - unabhängiger Software-Komponenten erwähnten Informationen WS1 bis WS4 aufnehmen kann. So werden nach anfänglicher Initialisierung der Zentralsteuereinheit Umladevorgänge während des Betriebs der Zentralsteuerheit vermieden, zumindest weitgehend vermieden.

Ein Hauptvorteil der erfindungsgemäßen Adressenverwaltungseinheit (Access Control) liegt darin, daß die beschriebene Vielzahl von Funktionen - die in bekannten Memory Management Units durchaus für sich vereinzelt vorhanden sein können - hier in eleganter einfa cher Weise zusammengefaßt und aufeinander abgestimmt realisiert sind. Insbesondere ist bisher keine Adressenverwaltungseinheit bekannt, die wie die Erfindung sowohl eine hohe Vielzahl, z.B. 2048, von Segmenten gleichzeitig verwalten als auch den Zugriff zu mehreren verschiedenen physikalischen Adreßräumen steuert, ohne daß dazu verschiedene logische Adreßräume vorgegeben werden.

Die Erfindung ist ferner in beliebigen, auch mehreren Typen von Multiprozessor-Zentralsteuereinheiten ohne Vorleistungen von deren Seite einsetzbar. Ferner kann eine beliebige, bereits existierende High-Level-Language-Software, mit nur eventuellen, sehr geringen Anpassungen an veränderte Hardware- und Software-Umgebungen, benutzt werden. Die Erfindung läßt außerdem mittels der Wortsilben WS2 und WS3 nur Zugriffe in vorgebbare Adreßräume zu. Ferner überwacht die Erfindung alle mit der Ansteuerung verbundenen Programmschritte, vgl. BEF, auf vorgebbare Zyklentypen, z.B. Lesen, wobei zusätzlich vorgebbare Statuskennzeichen der Zentralsteuereinheit, z.B. Alarme, mittels der vierten Wortsilbe WS4 miterfaßt werden können, ebenso vorgebbare Statuskennzeichen des Programms.

Die Erfindung weist außerdem mittels der dritten Wortsilbe WS3 unterschiedliche vorgebbare physikalische Adreßräume zu, z.B. auch Adreßräume, die durch periphere Organe IOP/MBG gebildet werden.

Überdies gestattet die Erfindung im Fehlerfall, d.h. vor allem mittels der dritten und/oder vierten Wortsilbe, Indizien zu sichern, die direkt auf Fehler in der Software verweisen und eine effektive Fehlerbeseitigung ermöglichen und/oder die eine online-Wiederaufnahme der Software nach der Fehlerbehandlung (ohne oder mit gestaffelten Recovery-Maßnahmen bei einem Neuanlauf der Zentralsteuereinheit oder des ganzen Vermittlungssystemes) erlauben, wobei die Indiziensicherung und Fehlereliminierung bei der Erfindung für eine Vielzahl von unabhängigen Teilprogrammen der Zentralsteuereinheit, also für eine Vielzahl von unabhängigen Software-Komponenten möglich ist, und zwar im allgemeinen ohne daß die Zentralsteuereinheit selber bei Bearbeitung einer neuen Komponente neu initialisiert, neu umgeladen oder neu behandelt werden müßte.

Die erfindungsgemäße Adressenverwaltungserinheit weist einen besonders einfachen Aufbau und eine besonders einfache Betriebsweise auf, wenn die Länge aller Wortsilben WS unabhängig von der Adresse ES dieser Wortsilben WS im Sonderspeicher SMY ist.

Die Arbeitsgeschwindigkeit der Zentralsteuereinheit ist besonders groß, wenn die Erfindung AC mehrfach angebracht ist, nämlich jeweils eine solche Adressenverwaltungseinheit AC bei jedem einen eigenen lokalen Speicher LMY aufweisenden zentralen Prozessor BP, CP bzw. zentralen Prozessorpaar BP, CP, wobei mittels der dritten Wortsilbe WS3 bevorzugt einmal der betreffende lokale Speicher LMY, ein anderes Mal einer der verschiedenen Speicherblöcke MB des zentralen Großspeichers CMY angesteuert wird.

Wenn die Erfindung AC jeweils auch bei zumindest einem Teil der einen eigenen lokalen Speicher LMY aufweisenden IO-Einheiten IOC bzw. IO-Einheitenpaare IOC angebracht ist, ist ein besonders rascher Betrieb der Multiprozessor-Zentralsteuereinheit, und zwar nämlich auch ihrer außerordentlich stark belasteten IO-Einheiten erreichbar.

## Patentansprüche

1. Adressenverwaltungseinheit (AC) zur Umwandlung logischer, in einem Programm (L) enthaltener Adressen (LA) in physikalische Adressen (PA, PO)
- für eine Multiprozessor-Zentralsteuereinheit eines rechnergesteuerten Nachrichtenvermittlungssystems mit einem zentralen Großspeicher (CMY), wobei
- die logische Adresse (LA) ein Adreßwort mit mindestens zwei Adreßsilben (ES, AS) darstellt, von denen die eine Adreßsilbe (ES) der Startadresse (WS1) eines logischen Adreßraumes (WS3/PO) und die andere Adreßsilbe (AS) der Adresse (PA) innerhalb dieses logischen Adreßraumes (WS3/PO) entspricht, wobei ferner
- sie einen Sonderspeicher (SMY) zur Speicherung von mehreren jeweils einem bestimmten Steuersignal entsprechenden Wortsilben (WS1.. .WS4) umfassenden Wörtern aufweist, die dort jeweils unter den durch die einen Adreßsilben (ES) gebildeten Adressen gespeichert sind und von denen
- die eine Wortsilbe (WS1) jeweils einer physikalischen Startadresse eines physikalischen Adreßraumes entspricht und
- die zweite Wortsilbe (WS2) der Anzahl der physikalisch vorhandenen Adressen des anzusteuernden physikalischen Adreßraumes entspricht, und wobei
- sie einen Addierer (AD) enthält, der jeweils die andere Adreßsilbe (AS) und die erste Wortsilbe (WS1) addiert,
**dadurch gekennzeichnet,**
daß in dem Sonderspeicher (SMY) eine dritte Wortsilbe (WS3) gespeichert ist, die einem von mehreren anzusteuernden physikalischen Objekten der Zentralsteuereinheit entspricht, zu denen neben dem zentralen Großspeicher (CMY) zusätzlich lokale Speicher (LMY) verschiedener zentraler Prozessoren (BP, CP), sowie periphere Einheiten (IOP, MBG) gehören, sowie
- eine vierte Wortsilbe (WS4) gespeichert ist, die Informationen über Zugriffsrechte entspricht,
- daß sie ferner einen Vergleicher aufweist, der jeweils die andere Adressilbe (AS) mit der zweiten Wortsilbe (WS2) vergleicht,
- und daß sie eine Checkeinheit (Ch) aufweist, die durch Auswertung der vierten Wortsilbe (WS4) den zugriff auf das gemäß der dritten Wortsilbe (WS3) anzusteuernde physikalische Objekt (PO) überwacht.

2. Adressenverwaltungseinheit (AC) nach Patentanspruch 1,
**dadurch gekennzeichnet,** daß
* die Länge aller Wortsilben (WS) unabhängig von der Adresse (ES) dieser Wortsilben (WS) im Sonderspeicher (SMY) ist.

3. Adressenverwaltungseinheit (AC) nach Patentanspruch 1 oder 2,
**dadurch gekennzeichnet,** daß
* sie mehrfach angebracht ist, nämlich jeweils eine Adressenverwaltungseinheit (AC) bei jedem einen eigenen lokalen Speicher (LMY) aufweisenden zentralen Prozessor (BP, CP) bzw. zentralen Prozessorpaar (BP, CP).

4. Adressenverwaltungseinheit (AC) nach Patentanspruch 3,
**dadurch gekennzeichnet,** daß
* sie auch jeweils bei zumindest einem Teil der einen eigenen lokalen Speicher (LMY) aufweisenden IO-Einheiten (IOC) bzw. IO-Einheitenpaare (IOC) angebracht ist.

## Claims

1. Address management unit (AC) for converting logical addresses (LA) contained in a program (L) into physical addresses (PA, PO)
- for a central multiprocessor control unit of a computer-controlled telecommunication exchange system having a central large memory (CMY), in which
- the logical address (LA) represents an address word having at least two address syllables (ES, AS), one address syllable (ES) of which corresponds to the start address (WS1) of a logical address space (WS3/PO), and the other address syllable (AS) corresponds to the address (PA) within said logical address space (WS3/PO), in which furthermore
- it has a special memory (SMY) for storing a plurality of words composed of word syllables (WS1...WS4) corresponding to a particular control signal in each case, which words are stored there under the addresses formed by the one address syllables (ES) in each case, and of which
- one word syllable (WS1) corresponds in each case to a physical start address of a physical address space, and
- the second word syllable (WS2) corresponds to the number of physically present addresses of the physical address space to be addressed, and in which
- it contains an adder (AD) which adds the other address syllable (AS) and the first word syllable (WS1) in each case,
characterised in that a third word syllable (WS3) is stored in the special memory (SMY) which corresponds to one of several physical objects of the central control unit to be addressed, which include, besides the central large memory (CMY), additional local memories (LMY) of different central processors (BP, CP) as well as peripheral units (IOP, MBG), and also
- a fourth word syllable (WS4) is stored which corresponds to information about access rights,
- in that it furthermore has a comparator which compares the other address syllable (AS) with the second word syllable (WS2) in each case,
- and in that it has a check unit (Ch) which monitors the access to the physical object (PO) to be addressed according to the third word syllable (WS3) by evaluating the fourth word syllable (WS4).

2. Address management unit (AC) according to Patent Claim 1, characterised in that the length of all word syllables (WS) is independent of the address (ES) of said word syllables (WS) in the special memory (SMY).

3. Address management unit (AC) according to Patent Claim 1 or 2, characterised in that it is provided several times, namely in each case an address management unit (AC) for each central processor (BP, CP) or central processor pair (BP, CP) having its own local memory (LMY).

4. Address management unit (AC) according to Patent Claim 3, characterised in that it is also provided in each case for at least some of the IO units (IOC) or IO unit pairs (IOC) having their own local memory (LMY).

## Revendications

1. Unité de gestion d'adresses (AC) pour la conversion d'adresses logiques (LA), contenues dans un programme (L), en des adresses physiques (PA, PO),
- pour une unité de commande centrale à multiprocesseurs d'un système de commutation d'informations assisté par ordinateur et comportant une mémoire de masse centrale (CMY), et dans laquelle
- l'adresse logique (LA) représentant un mot d'adresse comportant au moins deux syllabes d'adresse (ES, AS), parmi lesquelles une syllabe d'adresse (ES) correspond à l'adresse de départ (WS1) d'un espace adresses logique (WS3/PO) et l'autre syllabe d'adresse (AS1) correspond à l'adresse (PA) à l'intérieur de cet espace adresses logique (WS3/PO), et en outre
- l'unité de gestion d'adresses comporte une mémoire particulière (SMY) pour la mémorisation de plusieurs mots comportant des syllabes (WS1...WS4) correspondant respectivement à un signal de commande déterminé et qui sont mémorisées respectivement parmi les adresses formées par les premières syllabes d'adresse (ES), et parmi lesquelles
- une syllabe de mot (WS1) correspond respectivement à une adresse de départ physique d'un espace adresses physique, et
- la seconde syllabe de mot (WS2) correspond au nombre des adresses physiquement présentes de l'espace adresses physique devant être commandé, et
- une unité de gestion d'adresses comporte un additionneur (AD), qui additionne respectivement l'autre syllabe d'adresse (AS) et la première syllabe de mot (WS1),
caractérisée par le fait
que dans la mémoire particulière (SMY) est mémorisée une troisième syllabe de mot (WS3), qui correspond à l'un de plusieurs objets physiques de l'unité centrale de commande, qui doivent être commandés et auxquels appartiennent en outre, en plus de la mémoire de masse centrale (CMY), des mémoires locales (LMY) de différents processeurs centraux (BP, CP), ainsi que des unités périphériques (IOP, MBG), et
- une quatrième syllabe de mot (WS4), qui correspond à des informations concernant des droits d'accès, est mémorisée,
- qu'en outre l'unité de gestion d'adresses comporte un comparateur, qui compare respectivement l'autre syllabe d'adresse (AS) à la seconde syllabe de mot (WS2), et
- que l'unité de gestion comporte une unité de contrôle (Ch), qui, sur la base d'une évaluation de la quatrième syllabe de mot (WS4), contrôle l'accès à l'objet physique (PO), qui doit être commandé conformément à la troisième syllabe de mot (WS3).

2. Unité de gestion d'adresses (AC) suivant la revendication 1, caractérisée par le fait que
* la longueur de toutes les syllabes de mot (WS) est indépendante de l'adresse (ES) de ces syllabes de mot (WS) dans la mémoire particulière (SMY).

3. Unité de gestion d'adresses (AC) suivant la revendication 1 ou 2, caractérisée en ce que
* elle est prévue de façon multiple, c'est-à-dire qu'il est prévu respectivement une unité de gestion d'adresses (AC) dans chaque processeur central (BP, CP), qui possède sa propre mémoire locale (LMY), ou pour chaque couple de processeurs centraux (BP, CP).

4. Unité de gestion d'adresses (AC) suivant la revendication 3, caractérisée par le fait que
* elle est également prévue respectivement dans au moins une partie des unités IO (IOC) ou des couples d'unités IO (IOC), qui possèdent une mémoire locale propre (LMY).
